# EUROPEAN PATENT APPLICATION

(11) **EP 2 610 803 A1**
(43) Date of publication of application: **03.07.2013**
(21) Application number: 12187183.4
(22) Date of filing: 04.10.2012
(51) Int. Cl.: G06Q 30/02

(54) **Terminal apparatus, server apparatus, network system, and communication method**

(30) Priority: 06.10.2011 JP 2011222222
(71) Applicant: Dentsu Inc., Tokyo 105-7001 (JP)
(72) Inventor: Kinoshita, Nobuyuki, Tokyo, 105-7001 (JP)
(74) Representative: Schwabe - Sandmair - Marx

(57) **Abstract**

A terminal apparatus (100,200) according to an embodiment includes: a cookie memory unit (140) that stores an opt-allow cookie which is data set by a user and is data indicating whether use of user information regarding the user is permitted for each user information; a connecting unit (153) that performs communication connection with a server apparatus (20) that determines content to be delivered based on the user information; and a transmitting unit (154) that transmits the opt-allow cookie stored in the cookie memory unit (140) to the server apparatus (20), when the server apparatus (20) connected through the communication connection by the connecting unit (153) receives the cookie.

## Description

### FIELD

Embodiment described herein relate to a terminal apparatus, a server apparatus, a network system, a communication method, and a communication program.

### BACKGROUND

In the past, web servers have performed various processes using an HTTP cookie (Hyper Text Transfer Protocol Cookie: hereinafter, simply referred to as a "cookie") in some cases. For example, a web server transmits cookies to terminal apparatuses, when the terminal apparatuses access the web server through browsers. Thereafter, the browser of each terminal apparatus transmits the cookie to the web server, when each terminal apparatus accesses the web server. Thus, the web server can identify individual users using the terminal apparatuses. For example, the web server can provide customized content to each user.

For example, an advertisement delivery server or the like identifies users using cookies, specifies behavior histories or the like of the users, and delivers advertisement content regarding fields considered for the users to be interested in using the specified behavior histories. Such a technology is called targeting advertisement or the like and is considered to improve an advertisement delivery effect.
Patent Literature 1: Japanese Laid-open Patent Publication No. 2011-96202

However, the above-described technology according to Japanese Laid-open Patent Publication No. 2011-96202 has a problem that a server apparatus such as an advertisement delivery server may not have delivered content desired by users. Specifically, in the technology such as the targeting advertisement according to the related art, the fields are merely assumed for users to be interested in using the behavior histories or the like. Therefore, the fields may not be specified with high accuracy. For this reason, for example, the advertisement delivery server may not necessarily deliver advertisement content corresponding to the interests of the users, and consequently the advertisement delivery effect may not be improved.

The invention is devised in view of the above-described circumstance and an object of the invention is to provide a terminal apparatus, a server apparatus, a network system, a communication method, and a communication program capable of delivering content desired by users.

### SUMMARY

According to an aspect of the embodiments, a terminal apparatus includes a memory unit that stores permission data which is data set by a user and is data indicating whether use of user information regarding the user is permitted for each user information, a connecting unit that performs communication connection with a server apparatus that determines content to be delivered based on the user information, and a transmitting unit that transmits the permission data stored in the memory unit to the server apparatus, when the server apparatus connected through the communication connection by the connecting unit receives a cookie (HTTP cookie).

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a diagram illustrating an example of the configuration of a network system according to a first embodiment.
FIG. 2 is a diagram illustrating an example of content displayed on a browser of a terminal apparatus.
FIG. 3 is a diagram illustrating an example of the configuration of the terminal apparatus according to the first embodiment.
FIG. 4 is a diagram illustrating an example of information set in an Opt-allow cookie according to the first embodiment.
FIG. 5 is a diagram illustrating an example of a permission classification setting screen.
FIG. 6 is a diagram illustrating an example of a restriction element setting screen.
FIG. 7 is a diagram illustrating an example of the configuration of an advertisement delivery server according to the first embodiment.
FIG. 8 is a flowchart illustrating a communication processing order of the terminal apparatus according to the first embodiment.
FIG. 9 is a diagram illustrating an example of the configuration of a network system according to a second embodiment.
FIG. 10 is a diagram illustrating an example of the configuration of an advertisement delivery server according to the second embodiment.
FIG. 11 is a diagram illustrating an example of the configuration of a network system according to a third embodiment.
FIG. 12 is a diagram illustrating an example of the configuration of a terminal apparatus according to the' third embodiment.
FIG. 13 is a diagram illustrating an example of the configuration of an Opt-allow web server according to the third embodiment.
FIG. 14 is a diagram illustrating an Opt-allow cookie retained by the terminal apparatus of each embodiment according to a modified example.
FIG. 15 is a diagram illustrating the Opt-allow cookie retained by the terminal apparatus of each embodiment according to the modified example.

### DETAILED DESCRIPTION

Hereinafter, a terminal apparatus, a server apparatus, a network system, and a communication method according to embodiments of the present application will be described in detail with reference to the drawings. Further, the present application is not limited to the terminal apparatus, the server apparatus, the network system, and the communication method according to the embodiments.

### First Embodiment

### Configuration of Network System According to First Embodiment

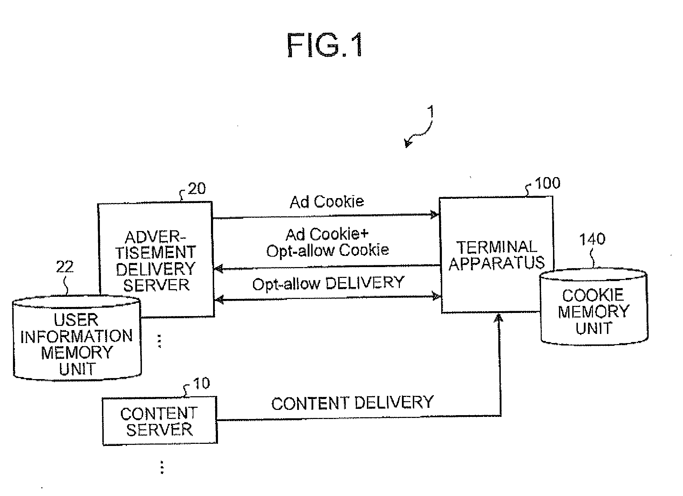

First, the network system according to a first embodiment will be described with reference to FIG. 1. FIG. 1 is a diagram illustrating an example of the configuration of the network system according to the first embodiment. As exemplified in FIG. 1, a network system 1 according to the first embodiment includes a content server 10, an advertisement delivery server (referred to as an "Ad server") 20, and a terminal apparatus 100. The terminal apparatus 100 is connected to the content server 10 and the advertisement delivery server 20 in a wired or wireless manner via a network (not illustrated) to communicate with the content server 10 and the advertisement delivery server 20.

In the example illustrated in FIG. 1, the network system 1 includes one content server 10, one advertisement delivery server 20, and one terminal apparatus 100. However, the network system 1 may include a plurality of content servers 10, a plurality of advertisement delivery servers 20, and a plurality of terminal apparatuses 100.

The content server 10 is, for example, a web server and is a computer that delivers content (hereinafter, also referred to as "web content") such as web pages to the terminal apparatus 100. In the first embodiment, a web page delivered by the content server 10 is assumed to include an advertisement section in which content (hereinafter, also referred to as "advertisement content") for advertisement delivered by the advertisement delivery server 20 is displayed.

The advertisement delivery server 20 is a computer that delivers advertisement content to the terminal apparatus 100. For example, the advertisement delivery server 20 delivers the advertisement content to be displayed in an advertisement section of the web pages to the terminal apparatus 100. The advertisement content is, for example, image data for advertisement. Information such as a uniform resource locator (URL) of a site introducing a corporation name, a product name, and a product is described. The advertisement content is linked to the site or the like introducing products.

In the example illustrated in FIG. 1, the advertisement delivery server 20 includes a user information memory unit 22. The user information memory unit 22 stores user information which is various kinds of information regarding a user of the terminal apparatus 100. For example, the user information memory unit 22 stores, as the user information, attribute information (a sex, an address, an age, an income, or the like) of the user of the terminal apparatus 100, browse information (also referred to as a "behavior history") indicating a history of sites that the user browses using the terminal apparatus 100, and information regarding a purchase history or the like indicating a history of products purchased by the user on the sites. The user information memory unit 22 stores such user information for each user.

The terminal apparatus 100 is an information processing apparatus that is used by a user. Examples of the terminal apparatus 100 include a personal computer (PC), a cellular phone, and a personal digital assistant (PDA). The terminal apparatus 100 includes a cookie memory unit 140, as exemplified in FIG. 1. The cookie memory unit 140 stores cookies received from a server apparatus such as the content server 10 or the advertisement delivery server 20. Specifically, the terminal apparatus 100 includes a web browser (hereinafter, simply referred to as a "browser"). Thus, when the terminal apparatus 100 receives the cookies from the server apparatus through the browser, the terminal apparatus 100 stores the received cookies in the cookie memory unit 140.

The network system 1 having the above-described configuration according to the first embodiment can deliver the advertisement content regarding the fields which users are interested in. The delivery of the advertisement content will be described in brief. For example, when the terminal apparatus 100 initially accesses the advertisement delivery server 20 or a valid period of the cookie generated previously for the terminal apparatus 100 expires, the advertisement delivery server 20 first generates a cookie (referred to as "Ad cookie" in FIG. 1) for the terminal apparatus 100 and transmits the generated Ad cookie to the terminal apparatus 100. In this case, the terminal apparatus 100 stores the Ad cookie received from the advertisement delivery server 20 in the cookie memory unit 140. Thereafter, when the terminal apparatus 100 receives web content including an advertisement section from the content server 10, the terminal apparatus 100 transmits a request for acquiring advertisement content displayed in the advertisement section to the advertisement delivery server 20.

At this time, a general terminal apparatus transmits the Ad cookie received from the advertisement delivery server 20 described above to the advertisement delivery server 20. Thus, the advertisement delivery server 20 can specify a browser of the terminal apparatus using the Ad cookie received from the terminal apparatus. In other words, the advertisement delivery server 20 can specify the user of the terminal apparatus. Further, the advertisement delivery server 20 acquires the user information corresponding to the specified user from the user information memory unit 22, estimates a field which the user is interested in based on the acquired user information, and delivers advertisement content regarding the field to the terminal apparatus. However, the advertisement delivery server 20 merely estimates the field considered for the user to be interested in, and thus the interest of the user may not be said to be specified. For this reason, the advertisement delivery server 20 may not necessarily deliver the advertisement content corresponding to the interest of the user, and consequently the advertisement delivery effect may not be improved.

Conversely, when the terminal apparatus 100 transmits a request for acquiring advertisement content to the advertisement delivery server 20, the terminal apparatus 100 according to the first embodiment transmits not only the Ad cookie but also permission data, which is data indicating whether use of the user information is permitted for each user information, as a cookie to the advertisement delivery server 20. Hereinafter, the permission data is also referred to as an "Opt-allow cookie". For example, the Opt-allow cookie is a cookie set by a user. For example, the Opt-allow cookie is data such as a flag indicating whether use of the user information by the advertisement delivery server 20 is permitted for each user information (a sex, an address, an age, an income, a behavior history, a purchase history, or the like).

When the advertisement delivery server 20 receives an Ad cookie and an Opt-allow cookie from the terminal apparatus 100, the advertisement delivery server 20 specifies the user of the terminal apparatus 100 based on the Ad cookie. Further, referring to the Opt-allow cookie, the advertisement delivery server 20 specifies the user information permitted to use. The advertisement delivery server 20 then acquires the user information permitted to be used among the user information corresponding to the user of the terminal apparatus 100 from the user information memory unit 22. The advertisement delivery server 20 then determines the advertisement content to be delivered based on the acquired user information and delivers the determined advertisement content (referred to as "Opt-allow delivery" in FIG. 1) to the terminal apparatus 100. That is, the advertisement delivery server 20 according to the first embodiment determines the advertisement content to be delivered based on the user information specified by the Opt-allow cookie on which the intention of the user is reflected. Therefore, it is possible to specify the field which the user is interested in with high accuracy. Further, it is possible to deliver the advertisement content regarding the field which the user is actually interested in.

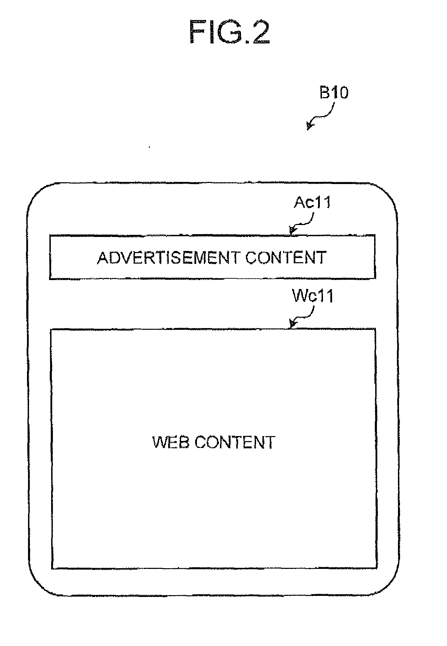

Thus, the terminal apparatus 100 according to the first embodiment displays the web content delivered from the content server 10 and the advertisement content delivered from the advertisement delivery server 20 on the browser. FIG. 2 is a diagram illustrating an example of content displayed on the browser of the terminal apparatus 100. In the example illustrated in FIG. 2, the terminal apparatus 100 displays a browser B10 on a predetermined display unit (a display unit 130 to be described below). The terminal apparatus 100 also displays a web content Well delivered from the content server 10 on the browser B10 and displays an advertisement content Ac11 delivered from the advertisement delivery server 20 on the browser B10. Information regarding the advertisement section in which the advertisement content Ac11 is displayed and information regarding the advertisement delivery server 20 retaining the advertisement content Ac11 are designated by, for example, an HTML file or the like that forms the web content Wc11.

Thus, in the network system 1 according to the first embodiment, the terminal apparatus 100 transmits the Optallow cookie set by the user to the advertisement delivery server 20, and the advertisement delivery server 20 determines the advertisement content to be delivered based on the Opt-allow cookie on which the intention of the user is reflected. Thus, the advertisement delivery server 20 according to the first embodiment can deliver the advertisement content regarding the field which the user is actually interested in.

For example, the user is assumed to be interested in a field regarding the previously browsed sites. In this case, in the first embodiment, the user can obtain advertisement content of the fields regarding the previously browsed sites from the advertisement delivery server 20 by setting the Opt-allow cookie such that the use of the behavior history is permitted. For example, the user is assumed to be interested in the field regarding the previously purchased products. In this case, in the first embodiment, the user can obtain advertisement content of the fields regarding the previously purchased products from the advertisement delivery server 20 by setting the Opt-allow cookie to permit the use of the purchase history.

Accordingly, in the network system 1 according to the first embodiment, the advertisement delivery server 20 can deliver the advertisement content suitable for the request of the user and the user of the terminal apparatus 100 can obtain the desired advertisement content. Therefore, it is possible to realize content distribution advantageous for both the advertisement delivery server 20 and the terminal apparatus 100.

Hereinafter, the configuration of the terminal apparatus 100 illustrated in FIG. 1 will be described. Next, the configuration of the advertisement delivery server 20 will be described, and then the processing order of the terminal apparatus 100 will be then described. Finally, the advantages of the first embodiment will be described.

### Configuration of Terminal Apparatus According to First Embodiment

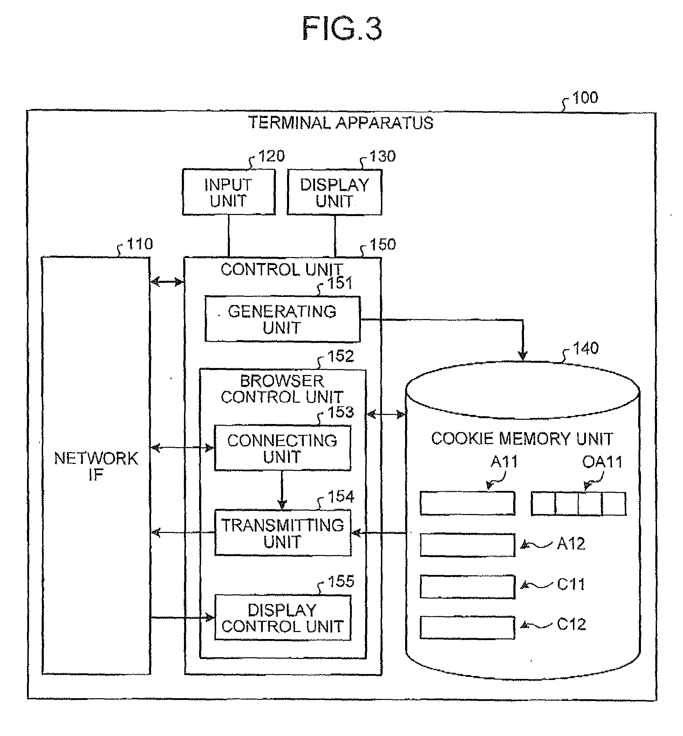

The configuration of the terminal apparatus 100 illustrated in FIG. 1 will be described with reference to FIG. 3. FIG. 3 is a diagram illustrating an example of the configuration of the terminal apparatus 100 according to the first embodiment. As exemplified in FIG. 3, the terminal apparatus 100 according to the first embodiment includes a network interface (IF) 110, an input unit 120, the display unit 130, the cookie memory unit 140, and a control unit 150.

The network IF 110 is a network interface card (NIC) that transmits and receives various kinds of data to and from server apparatuses such as the content server 10 and the advertisement delivery server 20. For example, the network IF 110 receives web content from the content server 10, receives an Ad cookie or advertisement content from the advertisement delivery server 20, and transmits the Optallow cookie to the advertisement delivery server 20.

The input unit 120 is an input device that receives inputs of various operations from the user. For example, a keyboard or a mouse can be used as the input unit 120. The display unit 130 is a display device that controls displaying various kinds of information. For example, a liquid crystal display can be used as the display unit 130. Further, the terminal apparatus 100 may include a touch panel type display unit (touch display or the like) in which the input unit 120 and the display unit 130 are integrated.

The cookie memory unit 140 is a storage device such as a semiconductor memory device such as random access memory (RAM) or flash memory, a hard disk, or an optical disc. The cookie memory unit 140 stores various kinds of cookies. Specifically, the cookie memory unit 140 stores an Ad cookie transmitted from the advertisement delivery server 20, a cookie (hereinafter, also referred to as a "content cookie") transmitted from the content server 10, and an Opt-allow cookie set by the user.

In the example illustrated in FIG. 3, the cookie memory unit 140 stores Ad cookies A11 and A12, content cookies C11 and C12, and an Opt-allow cookie OA11. The Ad cookies A11 and A12 may be cookies transmitted from the same advertisement delivery server 20 or may be cookies transmitted from the different advertisement delivery servers 20. Likewise, the content cookies C11 and C12 are cookies transmitted from the same content server or the different content servers.

Next, the Opt-allow cookie according to the first embodiment will be described. The Opt-allow cookie serves as a permission code indicating whether the user permits the server apparatus such as the advertisement delivery server 20 to use the user information. In the Opt-allow cookie according to the first embodiment, the user information itself ("sex: male", "address: Tokyo...", "age: 25", "yearly income: 5 million yen" and the like) is not set, but a flag indicating that the user permits the use of the user information to be used is set for each user information. In the first embodiment, this is because the advertisement delivery server 20 retains the user information itself (a behavior history, a purchase history, or the like) in the user information memory unit 22 and the terminal apparatus 100 notifies the advertisement delivery server 20 whether the user permits the advertisement delivery server 20 to use each user information stored in the user information memory unit 22 using the Opt-allow cookie.

The format of the Opt-allow cookie conforms with the specifications of the cookie defined in request for comments (RFC) 2109, 2965, or 6265. For example, "OPTALLOW" or the like is set in "NAME" of the Opt-allow cookie, and information such as a flag indicating whether the use of the user information is permitted is set in "VALUE" of the Opt-allow cookie. Further, the invention is not limited to "OPTALLOW" set in "NAME" but any information may be used as long as information identifying the Optallow cookie is used.

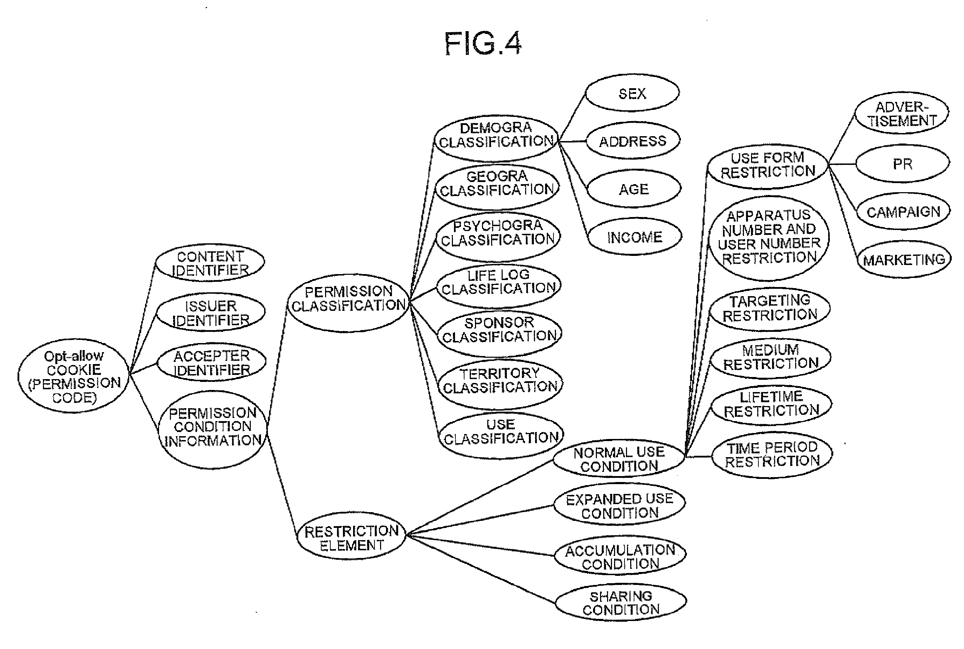

The format of the information set in VALUE described above may be a fixed length type format in which the data sizes of various kinds of information are fixed, may be a variable length type format in which the data sizes of various kinds of information are variable, may be a format in which the fixed length type format and the variable length type format are combined, may be a comma-separated-values (CSV) type format, or may be a format in which a predetermined special character string (for example, ";") is a separating character. For example, when the format of the Opt-allow cookie is the fixed length type format or the variable length type format, an area is defined in which various kinds of information (a flag or the like indicating whether use of "sex" is permitted) to be described below with reference to FIG. 4 are set. For example, when the format of the Opt-allow cookie is a CSV type format or the special character string separation type format, a setting order of various kinds of information to be described below is defined. When the format of the Opt-allow cookie is the variable length type format, the fact that the data size of a variable length data portion is set as an offset is defined in the Opt-allow cookie. Further, information obtained after a URL is encoded may be set in VALUE. The terminal apparatus 100 and the advertisement delivery server 20 operate in conformity with the above-described definition.

The case in which the Opt-allow cookie conforms with RFC has been described above. However, the Opt-allow cookie may not necessarily conform with the conventional specifications of the cookie. For example, new specifications for the Opt-allow cookie may be defined.

Next, information set in the Opt-allow cookie will be described with reference to FIG. 4. FIG. 4 is a diagram illustrating an example of information set in the Opt-allow cookie according to the first embodiment. In FIG. 4, an example of the information set in "VALUE" of the Opt-allow cookie is illustrated.

As exemplified in FIG. 4, information such as a "content identifier", an "issuer identifier", an "accepter identifier", and "permission condition information" are set in the Opt-allow cookie.

The "content identifier" represents identification information or the like used to identify the Opt-allow cookie. The "issuer identifier" represents identification information or the like used to identify a browser which is an issuer (transmitting source) of the Opt-allow cookie. For example, a server apparatus such as the advertisement delivery server 20 specifies the browser which is a transmitting source of the Opt-allow cookie, referring to the identification information set in the "issuer identifier". The "accepter identifier" represents identification information or the like used to identify a server apparatus which is an accepter (transmission destination) of the Opt-allow cookie. For example, the domain, the internee protocol (IP) address, or the like of the advertisement delivery server 20 is set in the "accepter identifier". The "permission condition information" includes "permission classification" indicating whether the user of the user information is permitted and a "restriction element" indicating a use condition or the like restricting the use of the user information.

The Opt-allow cookie in which the above-described information is set indicates that the server apparatus identified by the "accepter identifier" is permitted to use the user information permitted to be used by the "permission condition information" in a process of determining content to be delivered by the terminal apparatus 100 (the browser included in the terminal apparatus 100) identified by the "issuer identifier".

The "permission condition information" will be described in detail. As exemplified in FIG. 4, information such as "demogra (demographical) classification", "geogra (geographic) classification", "psychogra (psychographic) classification", "life log classification", "sponsor classification", "territory classification", and "use classification" are set in the "permission condition information" as "permission classification".

The "demogra classification" represents the attribute information of the user or represents whether the use of individual information or the like is permitted. For example, the "demogra classification" includes items such as "sex", "address", "age", and "income" of the users. A flag indicating whether the information is used is set for each of the items. Thus, the user of the terminal apparatus 100 can notify the advertisement delivery server 20 of whether the user information regarding the "demogra classification" is used. Hereinafter, when the use of the user information is permitted, "1" is set in the flag. When the use of the user information is not permitted, "0" is set in the flag.

The "geogra classification" represents whether the use of information regarding the position of the terminal apparatus 100 is permitted. For example, the "geogra classification" includes items such as a "current position" of the terminal apparatus 100. A flag indicating whether the information is used is set in each item. Thus, the user of the terminal apparatus 100 can notify the advertisement delivery server 20 of whether the user information regarding the "geogra classification" is used.

The "current position" will be described. Although not illustrated in FIG. 3, the terminal apparatus 100 according to the first embodiment has the function of a global positioning system (GPS). Therefore, the terminal apparatus 100 sometimes transmits current position information indicating the current position of the terminal apparatus 100 to the advertisement delivery server 20. When the use of the current position information is permitted in the Opt-allow cookie, the advertisement delivery server 20 determines advertisement content to be delivered using the current position information received from the terminal apparatus 100. when the use of the current position information is not permitted in the Optallow cookie, the advertisement delivery server 20 determines advertisement content to be delivered using no current position information.

The "psychogra classification" represents whether the use of information regarding the preference, intention, or the like of the user is permitted. For example, the "psychogra classification" includes "sweet", "fruit", and "drink" as items regarding the preference of the user. A flag indicating whether the user is interested in the item is set in each item. Further, for example, the "psychogra classification" includes an item of "I would like to browse free content with an advertisement" and an item of "I would like to view only car advertisements" as the items regarding the intention of the user. A flag indicating whether the intention of the user is present is set in each item. Thus, the user of the terminal apparatus 100 can notify the advertisement delivery server 20 of the information regarding the preference, the intention, and the like of the user. Hereinafter, a flag of "1" is assumed to be set in an item which the user is interested in. A flag of "0" is assumed to be set in an item which the user is not interested in. Further, a flag of "1" is assumed to be set in an item which is intended by the user. A flag of "0" is assumed to be set in an item which is not intended by the user.

The "life log classification" represents whether the use of various kinds of history information is permitted. For example, the "life log classification" includes items such as a "browse history (behavior history)" of the sites browsed by the user using the terminal apparatus 100, a "purchase history" of products purchased from various sites, a "medical care history" of the user, and a "job history" of the user. A flag indicating whether the use of the information is permitted is set in each item. Thus, the user of the terminal apparatus 100 can notify the advertisement delivery server 20 of whether the use of the user information (the preference or intention of the user) regarding the "life log classification" is permitted.

The "sponsor classification" represents information regarding an advertiser of advertisement content desired by the user. For example, the "sponsor classification" includes items such as "AAA corporation", "BBB corporation", "food-related corporations", and "sports-related corporations" as the information regarding the advertiser. A flag indicating whether an advertiser is the advertiser of the advertisement content desired by the user is set in each item. Thus, the user of the terminal apparatus 100 can notify the advertisement delivery server 20 of whether the use of the user information regarding the "sponsor classification" is permitted. As a result, the user can acquire the advertisement content provided by the desired advertiser.

The "territory classification" represents information regarding the place of a delivery source of advertisement content desired by the user. For example, the "territory classification" includes items such as "Japan" and "USA" as the names of nations in which the advertisement delivery server 20 is equipped. A flag indicating whether the delivery source of the advertisement content is a permitted nation is set in each item. Thus, the user of the terminal apparatus 100 can notify the advertisement delivery server 20 of whether the use of the user information regarding the "territory classification" is permitted. As a result, the user can acquire the advertisement content only from the advertisement delivery server 20 equipped in the desired nation.

In the "use classification", a code value or the like is set which indicates one of a download method and a streaming method as a method of acquiring the users information from another apparatus. In the first embodiment, since the "use classification" is not used, the description there will not be made.

As exemplified in FIG. 4, information regarding a "normal use condition", an "expanded use condition", an "accumulation condition", and a "sharing condition" is set as the "restriction element" restricting the use of the user information in the "permission condition information". In the Opt-allow cookie according to the first embodiment, the "restriction element" can be set in each item included in the "permission classification". For example, in the Opt-allow cookie according to the first embodiment, one "restriction element" may be set for the "permission classification" indicating all of the user information, the "restriction element" may be set for each classification such as the "demogra classification", and the "restriction element" may be set in each detailed item such as "sex". A unit in which the "restriction element" is set is determined by a user's setting operation to be described below.

When the "restriction element" is described in more detail, "use form restriction", "apparatus number and user number restriction", "targeting restriction", "medium restriction", "lifetime restriction", and "time period restriction", and the like are set in the "normal use condition".

The "use form restriction" represents information used to restrict the use purpose of the user information. For example, the "use form restriction" includes items such as "advertisement", "public relation (PR)", "campaign", and "marketing" as the use purpose of the user information. A flag indicating whether the use of the user information is permitted for the purpose is set in each item.

For example, when the advertisement delivery server 20 receives the Opt-allow cookie in which the flag of "1" indicating use permission is set in the "advertisement" of the "use form restriction" and determines the advertisement content (content for advertisement) to be delivered, the advertisement delivery server 20 uses even the user information restricted in the use by the "use form restriction". On the other hand, when the advertisement delivery server 20 receives the Opt-allow cookie in which the flag of "0" indicating no use permission is set in the "advertisement" of the "use form restriction" and determines the advertisement content to be delivered, the advertisement delivery server 20 does not use the user information restricted in the use by the "use form restriction". Further, for example, when the advertisement delivery server 20 receives the Opt-allow cookie in which the flag of "1" indicating user permission is set in the "PR" of the "use form restriction" and determines PR content (content for PR) to be delivered, the advertisement delivery server 20 uses even the user information restricted in the use by the "use form restriction". Conversely, when the advertisement delivery server 20 receives the Opt-allow cookie in which the flag of "0" indicating no use permission is set in the "PR" of the "use form restriction" and determines the PR content to be delivered, the advertisement delivery server 20 does not use the user information restricted in the use by the "use form restriction". Thus, the user can restrict the use purpose of the user information for each information using the Opt-allow cookie.

The "apparatus number and user number restriction" represents information for maintaining k-anonymity. In this example, the upper limit values of the number of terminal apparatuses and the number of users specified based on the user information are set. Specifically, the "apparatus number and user number restriction" indicates the permission of the use of the user information, when the number of terminal apparatuses or users specified based on the user information restricted by the "apparatus number and user number restriction" is greater than the numerical value set in the "apparatus number and user number restriction". The "apparatus number and user number restriction" indicates no permission of the use of the user information, when the number of terminal apparatuses or users specified based on the user information is equal to or less than the numerical value set in the "apparatus number and user number restriction".

For example, the advertisement delivery server 20 is assumed to receive the Opt-allow cookie in which "10" is set in the "apparatus number and user number restriction". Here, the "apparatus number and user number restriction" is set for the "demogra". At this time, when the number of users specified in the "demogra" in regard to the user of the terminal apparatus 100 is greater than "10", the advertisement delivery server 20 determines advertisement content to be delivered using the "demogra". On the other hand, when the number of users specified in the "demogra" in regard to the user of the terminal apparatus 100 is equal to or less than "10", the advertisement delivery server 20 determines advertisement content to be delivered using no "demogra". For example, since a predetermined user is specified from the "demogra" in which an address including even a house number is set, the advertisement delivery server 20 does not use the "demogra".

The "targeting restriction" represents whether the user information is used for targeting. For example, the "targeting restriction" includes items such as the "demogra", the "geogra", the "psychogra", and the "life log", and a flag is set in each item.

The "medium restriction" represents information regarding a medium (device) good as a delivery destination of advertisement content determined based on the user information. For example, the "medium restriction" includes items such as an "owned terminal", an "outdoor advertisement apparatus", and an "indoor advertisement apparatus", and a flag indicating whether the delivery is possible is set in each item. In the first embodiment, the case has been described in which the advertisement content is delivered to the terminal apparatus 100 (the "owned terminal" owned by the user) by the advertisement delivery server 20. However, when the advertisement delivery server 20 acquires the current position information from the terminal apparatus 100, the advertisement delivery server 20 may deliver the advertisement content to a digital signage equipped near the current position of the terminal apparatus 100. The "outdoor advertisement apparatus" and the "indoor advertisement apparatus" refer to such a digital signage.

In the "lifetime restriction", the number of times the user information can be used, the number of times the advertisement content determined based on the user information is delivered, a usable period of the user information, or the like is set. A time period or the like in which the use of the user information is permitted is set in the "time period restriction". Thus, the user can restrict the number of times of use, the use period, or the like of the user information for each information by using the Opt-allow cookie.

The "expanded use condition" represents an expanded area of the Opt-allow cookie. A period or the like in which the advertisement delivery server 20 is permitted to retain each information is set in the "accumulation condition". A flag indicating whether the user information is shared between the advertisement delivery servers is set in the "sharing condition". In the first embodiment, since the case in which the "expanded use condition", the "accumulation condition", and the "sharing condition" are not used is described, the description thereof will not be made here.

The various kinds of information described above are set in the Opt-allow cookie. For example, the Opt-allow cookie is assumed to have the fixed length type format. The Opt-allow cookie is assumed to be defined such that the "content identifier", the "issuer identifier", the "accepter identifier", and the "permission condition information" are set in this order. Further, the "permission condition information" is assumed to be defined such that the "demogra classification", the "sex", the "address", the "age", the "income", the "geogra classification", the "current position", the "psychogra classification", the "preference", the "sweet", the "fruit", the "drink", the "intention", "I would like to browse free content with an advertisement", "I would like to view only car advertisements", the "life log classification", the "behavior history", the "purchase history", the "medical care history", the "job history", the "sponsor classification", the "territory classification", and the "use classification" are set in this order.

Further, data of "11010001111010111100..." is set in the Opt-allow cookie. Here, the setting information of the "content identifier", the "issuer identifier", and the "accepter identifier" is not described. The beginning "1" indicates the "demogra classification", the subsequent "1" indicates the "sex", the subsequent "0" indicates the "address", the subsequent "1" indicates the "age", the subsequent "0" indicates the "income", the subsequent "0" indicates the "geogra classification", the subsequent "0" indicates the "current position", the subsequent "1" indicates the "psychogra classification", the subsequent "1" indicates the "preference", the subsequent "1" indicates the "sweet", the subsequent "1" indicates the "fruit", the subsequent "0" indicates the "drink", the subsequent "1" indicates the "intention", the subsequent "0" indicates "I would like to browse free content with an advertisement", the subsequent "1" indicates "I would like to view only car advertisements", the subsequent "1" indicates the "life log classification", the subsequent "1" indicates the "behavior history", the subsequent "1" indicates the "purchase history", the subsequent "0" indicates the "medical care history", and the subsequent "0" indicates the "job history".

In the above case, the user of the terminal apparatus 100 permits the use of the "sex" and the "age" in the "demogra classification", but does not permit the use of the "income" and the "address". Further, the user does not permit the use of the "geogra classification". The user permits the use of the "psychogra classification". The preference of the user indicates the "sweet" and the "fruit" and also indicates the intention of "I would like to view only car advertisements". Furthermore, the user permits the use of the "behavior history" and the "purchase history" in the "life log classification", but does not permit the use of the "medical care history" and the "job history".

Thus, using the Opt-allow cookie, the user of the terminal apparatus 100 can notify the advertisement delivery server 20 of the items of the user information for which the use is permitted and can also notify the advertisement delivery server 20 of the preference, the intention, or the like of the user himself or herself. Thus, the user can obtain the desired advertisement content from the advertisement delivery server 20. For example, when the user sets the Opt--allow cookie, as in the above-described example, the user can obtain the advertisement content regarding cars advertised for sale to users of the sex or age of the user.

Further, the various kinds of information illustrated in FIG. 4 are merely examples, but the invention is not limited to the above-described examples. For example, in the Opt-allow cookie, it is not necessary to set all of the information exemplified in FIG. 4, but some of the information may be set. Further, for example, information other than the information exemplified in FIG. 4 may be set in the Opt-allow cookie. Further, the above-described formats of the Opt-allow cookie are merely examples, but the invention is not limited to the above-described examples. The Opt-allow cookie may have any format, as long as the server apparatus can be notified of information regarding whether the use of the user information exemplified in FIG. 4 is permitted or information regarding the preference, the intention, or the like of the user as a cookie.

Referring back to FIG. 3, for, example, the control unit 150 is realized by causing a central processing unit (CPU), a micro processing unit (MPU), or the like to execute a program stored in a storage device (not illustrated) in random access memory (RAM) as a work area. Further, for example, the control unit 150 is realized by an integrated circuit such as an application specific integrated circuit (ASIC) or a field programmable gate array (FPGA). The control unit 150 includes a generating unit 151 and a browser control unit 152.

The generating unit 151 generates an Opt-allow cookie through a user's operation and stores the generated Optallow cookie in the cookie memory unit 140. Specifically, when the user performs an operation of setting the Optallow cookie, the generating unit 151 displays a setting screen for setting the Opt-allow cookie on the display unit 130. Next, when the user performs various setting operations on the setting screen, the generating unit 151 generates the Opt-allow cookie in accordance with the various setting operations.

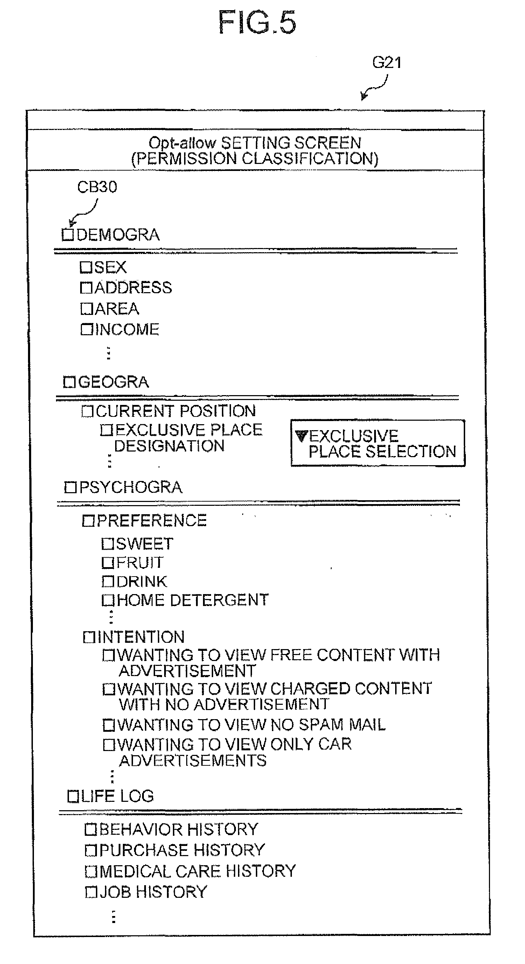

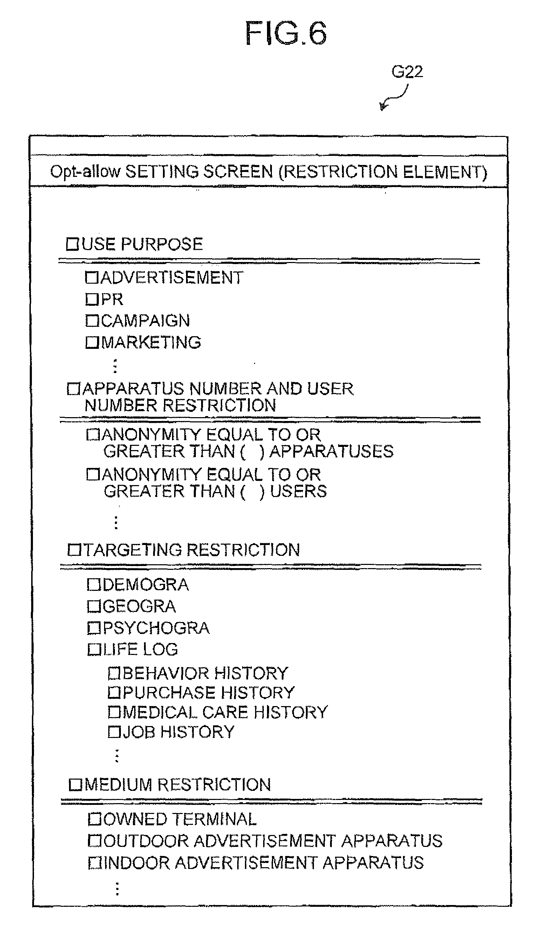

Here, FIGS. 5 and 6 are diagrams illustrating an example of setting screens of the Opt-allow cookie displayed by the generating unit 151. FIG. 5 illustrates an example of a permission classification setting screen G21 for setting the "permission classification" exemplified in FIG. 4. FIG. 6 illustrates an example of a restriction element setting screen G22 for setting the "restriction element" exemplified in FIG. 4.

As illustrated in FIG. 5, the user can set items permitted to be used by selecting check boxes of the permission classification (the "demogra" and the like) exemplified in FIG. 4 and check boxes of detailed items (the "sex" and the like) included in each permission classification on the permission classification setting screen G21.

For example, when the user performs a setting operation of checking a check box CB30 located on the left of the character string data "demogra" on the permission classification setting screen G21, the use of the user information (the "sex" and the like) included in the "demogra" is permitted. Further, when the user performs a setting operation of not checking the check boxes of the character string data the "sex" and the "address" and checking the check boxes of the character string data "age" and the "income", the use of the "sex" and the "address" in the user information included in the "demogra" is not permitted, but the use of the "age" and the "income" is permitted.

Further, when the user checks the "current position" and an "exclusive place designation" of the "geogra" on the permission classification setting screen G21 exemplified in FIG. 5, the user can select an exclusive place by a pull-down for selecting, for example, prefectural and city governments or city, town, and village. The "exclusive place designation" enables the use of the current position information to be permitted except for the predetermined place. Further, when the user performs an operation of setting the "exclusive place designation", a code value or the like indicating the exclusive place is set in the Optallow cookie.

Further, although not illustrated in FIG. 5, the setting operations can be also performed for the items of the "sponsor classification", the "territory classification", and the "use classification" exemplified in FIG. 4 on the permission classification setting screen G21.

Further, as illustrated in FIG. 6, the user can set the restriction elements by selecting check boxes of the "restriction element" (the "use form restriction") exemplified in FIG. 4 and check boxes of detailed items (the "advertisement" and the like of the use form restriction) included in each permission classification on the restriction element setting screen G22. As described above, in the Opt-allow cookie according to the first embodiment, the "restriction element" can be set for each item included in the "permission classification". That is, the restriction element setting screen G22 can be set for each item displayed on the permission classification setting screen G21 exemplified in FIG. 5. When an example in which the setting can be performed is given, for example, links to the restriction element setting screen G22 are configured in the permission classifications of the "demogra", the "geogra", the "psychogra", and the "life log" and the detailed items of the "sex", the "address", ..., and the "job history" displayed on the permission classification setting screen G21 exemplified in FIG. 5. Therefore, the restriction element setting screen G22 functions as a screen for setting the "restriction elements" in the user information of the link source. Thus, the user can set the "restriction element" in each of the permission classifications and the detailed items.

Further, although not illustrated in FIG. 6, the setting operations can be also performed for the items of the "lifetime restriction", the "time period restriction", the "accumulation condition", and the "sharing condition" exemplified in FIG. 4 on the restriction element setting screen G22.

The generating unit 151 generates the Opt-allow cookie based on the information set on the permission classification setting screen G21 and the restriction element setting screen G22. Further, when the user performs an operation of updating the Opt-allow cookie, the generating unit 151 can update the Opt-allow cookie by displaying, on the display unit 130, the permission classification setting screen G21 and the restriction element setting screen G22 on which the state of the Optallow cookie stored in the cookie memory unit 140 is reflected.

Referring back to FIG. 3, the browser control unit 152 displays the browser on the display unit 130 in response to a user's operation performed using the input unit 120, and also performs HTTP communication with the content server 10 or the advertisement delivery server 20 through the browser. For example, the browser control unit 152 transmits an HTTP request to the content server 10 or the advertisement delivery server 20, or displays various kinds of content (web content or advertisement content) received from the content server 10 or the advertisement delivery server 20 on the browser. Further, when the browser control unit 152 receives a cookie (a content cookie, an Ad cookie, or the like) from the content server 10 or the advertisement delivery server 20, the browser control unit 152 stores the received cookie in the cookie memory unit 140.

The browser control unit 152 includes a connecting unit 153, a transmitting unit 154, and a display control unit 155. The connecting unit 153 performs communication connected with a server apparatus such as the advertisement delivery server 20 determining content to be delivered based on the user information. Further, the connecting unit 153 performs the communication connection with various kinds of server apparatuses as well as the advertisement delivery server 20.

When the advertisement delivery server 20 connected through the communication connection by the connecting unit 153 receives the cookie, the transmitting unit 154 transmits the Opt-allow cookie stored in the cookie memory unit 140 to the advertisement delivery server 20.

Specifically, when the transmitting unit 154 transmits a request for acquiring advertisement content to the advertisement delivery server 20, the transmitting unit 154 determines whether an Ad cookie received from the advertisement delivery server 20 is stored in the cookie memory unit 140. Then, when the Ad cookie is stored in the cookie memory unit 140, the transmitting unit 154 transmits the Ad cookie and the Opt-allow cookie stored in the cookie memory unit 140 to the advertisement delivery server 20.

The display control unit 155 displays and controls various kinds of content received from server apparatuses such as the content server 10 and the advertisement delivery server 20 on the browser. For example, as in the example illustrated in FIG. 2, the display control unit 155 displays web content received from the content server 10 and advertisement content received from the advertisement delivery server 20 on the browser.

### Configuration of Advertisement Delivery Server According to First Embodiment

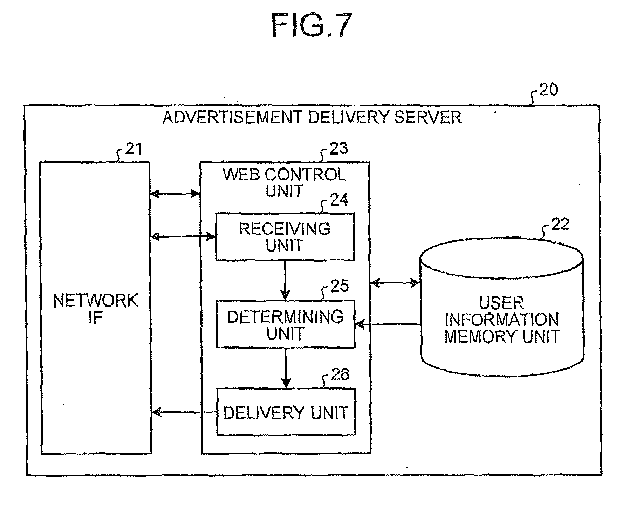

Next, the configuration of the advertisement delivery server 20 illustrated in FIG. 1 will be described with reference to FIG. 7. FIG. 7 is a diagram illustrating an example of the configuration of the advertisement delivery server 20 according to the first embodiment. As exemplified in FIG. 7, the advertisement delivery server 20 according to the first embodiment includes a network IF 21, a user information memory unit 22, and a web control unit 23.

The network IF 21 is an NIC or the like that transmits and receives various kinds of data to and from the terminal apparatus 100. For example, the network IF 21 transmits an Ad cookie and advertisement content to the terminal apparatus 100 and receives an Opt-allow cookie from the terminal apparatus 100.

The user information memory unit 22 is a storage device such as RAM, a semiconductor memory element such as flash memory, a hard disk, or an optical disc. The user information memory unit 22 stores various kinds of user information regarding the.user of the terminal apparatus 100, as described above. For example, the user information memory unit 22 stores the user information regarding the life log or the like.

For example, the web control unit 23 is realized by causing a CPU, an MPU, or the like to execute a program stored in a memory unit (not illustrated) on the RAM as a work area. Further, for example, the web control unit 23 is realized by an integrated circuit such as an ASIC or an FPGA.

The web control unit 23 operates the advertisement delivery server 20 as a web server and performs HTTP communication with the browser control unit 152 of the terminal apparatus 100. For example, when the access is established with the terminal apparatus 100 through the browser, the web control unit 23 generates an Ad cookie for the terminal apparatus 100 and transmits the generated Ad cookie to the terminal apparatus 100. Further, when the access is established with the terminal apparatus 100, the web control unit 23 updates various kinds of user information stored in the user information memory unit 22 based on the access details.

The web control unit 23 includes a receiving unit 24, a determining unit 25, and a delivery unit 26. The receiving unit 24 receives various kinds of cookies from the terminal apparatus 100. For example, the receiving unit 24 receives the Ad cookie and the Opt-allow cookie transmitted by the transmitting unit 154 of the terminal apparatus 100.

The determining unit 25 determines the advertisement content to be delivered to the terminal apparatus 100 based on the cookie received by the receiving unit 24. Specifically, when the receiving unit 24 receives the Ad cookie and the Opt-allow cookie, the determining unit 25 specifies the user of the terminal apparatus 100 based on the Ad cookie and specifies the user information permitted to be used with reference to the Opt-allow cookie. Then, the determining unit 25 acquires the user information corresponding to the user of the terminal apparatus 100 and the user information permitted to be used from the user information memory unit 22, and then determines the advertisement content to be delivered based on the acquired user information.

Further, when the receiving unit 24 receives an Ad cookie including no Opt-allow cookie, the determining unit 25 specifies the user of the terminal apparatus 100 based on the Ad cookie. Then, the determining unit 25 acquires the user information corresponding to the specified user from the user information memory unit 22 and determines the advertisement content to be delivered based on the acquired user information.

The delivery unit 26 delivers the advertisement content determined by the determining unit 25 to the terminal apparatus 100. Thus, since the advertisement delivery server 20 determines the advertisement content to be delivered based on the Opt-allow cookie on which the intention of the user is reflected, the advertisement delivery server 20 can deliver, to the terminal apparatus 100, the advertisement content regarding the field which the user is interested in.

### Processing Order of Terminal Apparatus According to First Embodiment

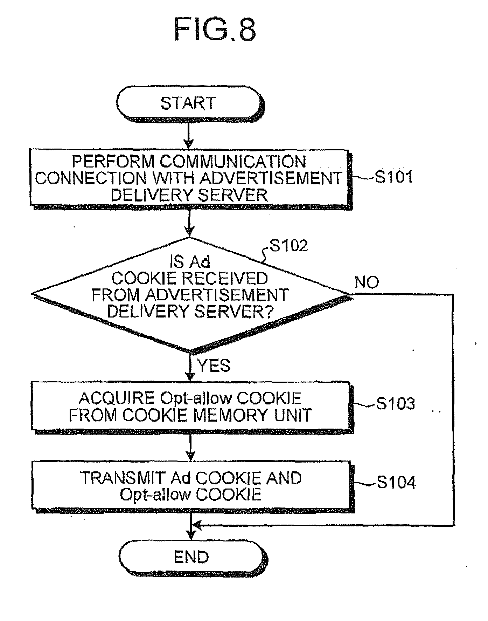

Next, a communication processing order of the terminal apparatus 100 according to the first embodiment will be described with reference to FIG. 8. FIG. 8 is a flowchart illustrating the communication processing order of the terminal apparatus 100 according to the first embodiment. In FIG. 8, a process of transmitting a cookie by the terminal apparatus 100 will be described.

As illustrated in FIG. 8, the connecting unit 153 of the terminal apparatus 100 performs the communication connection with the advertisement delivery server 20 (step S101). For example, the connecting unit 153 performs the communication connection with the advertisement delivery server 20, when the terminal apparatus 100 transmits a request for acquiring advertisement content to the advertisement delivery server 20.

Next, when the transmitting unit 154 transmits the request for acquiring the advertisement content to the advertisement delivery server 20, the transmitting unit 154 determines whether the Ad cookie received from the advertisement delivery server 20 is stored in the cookie memory unit 140 (step S102).

Then, when the Ad cookie is stored in the cookie memory unit 140 (Yes in step S102), the transmitting unit 154 acquires the Opt-allow cookie stored in the cookie memory unit 140 (step S103). Then, the transmitting unit 154 transmits the Ad cookie and the Opt-allow cookie acquired from the cookie memory unit 140 to the advertisement delivery server 20 (step S104).

Conversely, when the Ad cookie is not stored in the cookie memory unit 140 (No in step S102), the transmitting unit 154 does not transmit the cookie to the advertisement delivery server 20. Further, when the user does not set the Opt-allow cookie, the Opt-allow cookie is not stored in the cookie memory unit 140. In this case, the transmitting unit 154 transmits only the Ad cookie stored in the cookie memory unit 140 to the advertisement delivery server 20.

### Advantages of First Embodiment

As described above, the terminal apparatus 100 according to the first embodiment includes: the cookie memory unit 140 that stores the Opt-allow cookie set by the user; the connecting unit 153 that performs the communication connection with the advertisement delivery server 20 determining content to be delivered based on the user information; and the transmitting unit 154 that transmits the Opt-allow cookie stored in the cookie memory unit 140 to the advertisement delivery server 20, when the advertisement delivery server 20 connected through the communication connection by the connecting unit 153 receives the cookie.

Thus, the terminal apparatus 100 according to the first embodiment can acquire the advertisement content desired by the user from the advertisement delivery server 20 by transmitting the Opt-allow cookie on which the intention of the user himself or herself is reflected to the advertisement delivery server 20. Further, the advertisement delivery server 20 can deliver the advertisement content suitable for the request of the user by receiving the Opt-allow cookie from the terminal apparatus 100. Accordingly, an advertisement effect can be improved.

### Second Embodiment

In the first embodiment, the case in which the advertisement delivery server 20 retains the user information has been described. However, the advertisement delivery server 20 may not retain the user information. Further, even when the advertisement delivery server 20 retains the user information, the advertisement delivery server 20 may not retain all of the user information permitted to be used by the user. Accordingly, in a second embodiment, a case in which the advertisement delivery server 20 acquires the user information from a predetermined apparatus will be described. In the following embodiment, the same reference numerals are given to constituent elements having the same configuration as the constituent elements described above and the detailed description thereof will not be repeated.

### Configuration of Network System According to Second Embodiment

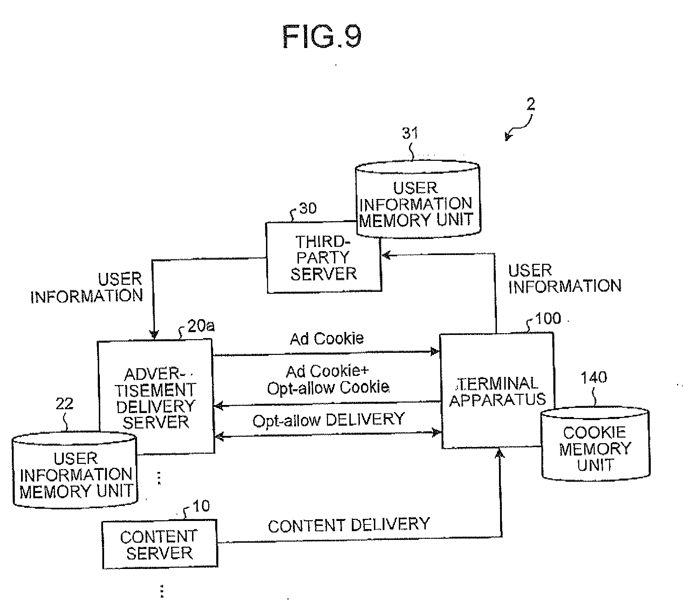

First, a network system according to the second embodiment will be described with reference to FIG. 9. FIG. 9 is a diagram illustrating an example of the configuration of the network system according to the second embodiment. As exemplified in FIG. 9, a network system 2 according to the second embodiment includes a content server 10, an advertisement delivery server 20a, a terminal apparatus 100, and a third-party server 30. The third-party server 30 is connected to the advertisement delivery server 20a and the terminal apparatus 100 in a wired or wireless manner via a network (not illustrated) to communicate with the advertisement delivery server 20a and the terminal apparatus 100.

The third-party server 30 is a computer that manages user information regarding a user of the terminal apparatus 100 and includes a user information memory unit 31. For example, the third-party server 30 is a server apparatus that is managed by a third party organization such as a corporation or an association different from an administrator of the advertisement delivery server 20a or the user of the terminal apparatus 100 or a server apparatus that is equipped in a cloud environment.

In the third-party server 30, various kinds of user information regarding the user are retained in the user information memory unit 31 with the permission of the user of the terminal apparatus 100. For example, the third-party server 30 receives the various kinds of user information from the terminal apparatus 100 and retains the received user information in the user information memory unit 31. For example, the third-party server 30 acquires the user information from another server apparatus (an advertisement delivery server or a content server) other than the advertisement delivery server 20a with user's permission and retains the acquired user information in the user information memory unit 31.

When the advertisement delivery server 20a receives an Opt-allow cookie from the terminal apparatus 100, the advertisement delivery server 20a specifies the user information permitted to be used, referring to the Optallow cookie. When the specified user information is not stored in the user information memory unit 22, the advertisement delivery server 20a requests the third-party server 30 to transmit the user information. In other words, the advertisement delivery server 20a transmits the request for acquiring the user information to the third-party server 30. Then, the advertisement delivery server 20a determines advertisement content to be delivered based on the user information permitted to be used among the user information transmitted from the third-party server 30 or the user information stored in the user information memory unit 22.

Thus, the advertisement delivery server 20a can determine the advertisement content to be delivered based on the user information, even when the advertisement delivery server 20a does not retain the user information permitted to be used in the user information memory unit 22.

### Configuration of Advertisement Delivery Server According to Second Embodiment

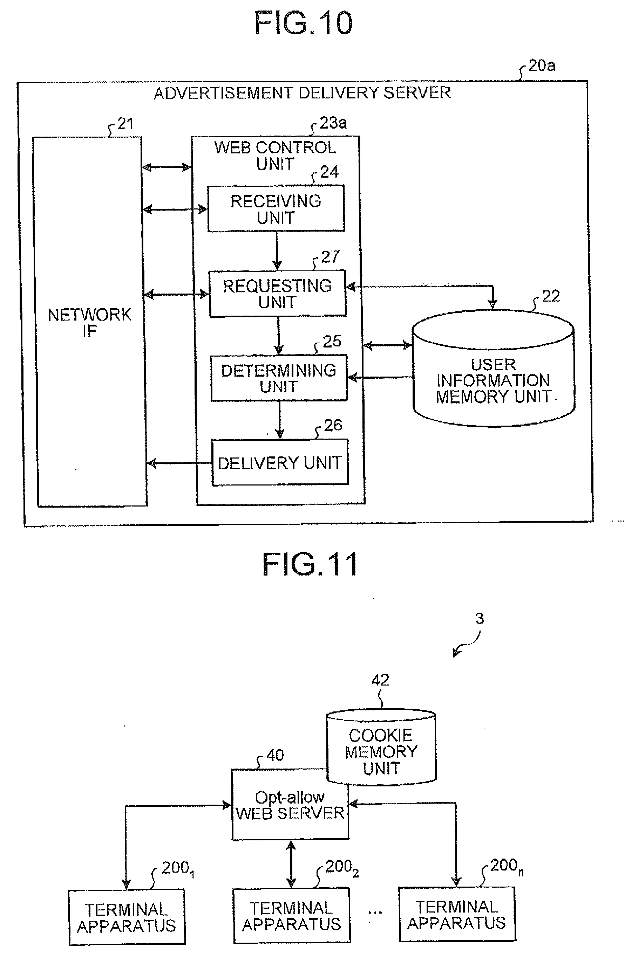

Next, the configuration of the advertisement delivery server 20a illustrated in FIG. 9 will be described with reference to FIG. 10. FIG. 10 is a diagram illustrating an example of the configuration of the advertisement delivery server 20a according to the second embodiment. As exemplified in FIG. 10, the advertisement delivery server 20a according to the second embodiment includes a network IF 21, a user information memory unit 22, and a web control unit 23a. The web control unit 23a includes a receiving unit 24, a determining unit 25, a delivery unit 26, and a requesting unit 27.

When the receiving unit 24 receives an Ad cookie and an Opt-allow cookie, the requesting unit 27 specifies the user information corresponding to the user of the terminal apparatus 100 based on the Ad cookie and the Opt-allow cookie. Here, when the specified user information is not stored in the user information memory unit 22, the requesting unit 27 transmits the request for acquiring the user information to the third-party server 30. Then, when the user information is transmitted from the third-party server 30 in response to the request for acquiring the user information, the requesting unit 27 stores the user information in the user information memory unit 22. Thus, the determining unit 25 can determine advertisement content to be delivered based on the user information transmitted from the third-party server 30.

Here, the terminal apparatus 100 according to the second embodiment sets storage location information indicating a location at which the user information is stored, in the "content identifier" of the Opt-allow cookie. For example, the terminal apparatus 100 acquires, from the third-party server 30, the storage location information indicating the location at which the user information is stored in the third-party server 30 and sets the acquired storage location information as a "content identifier". Further, the terminal apparatus 100 may acquire the storage location information in advance from the third-party server 30.

The requesting unit 27 of the advertisement delivery server 20a acquires the storage location information from the "content identifier" of the Opt-allow cookie and transits the request for acquiring the user information to the third-party server 30 based on the acquired storage location information. Thus, the requesting unit 27 can acquire the user information from the third-party server 30 designated by the terminal apparatus 100.

### Advantages of Second Embodiment

As described above, the advertisement delivery server 20a according to the second embodiment can acquire the user information from the third-party server 30, even when the user information permitted to be used is not retained. Therefore, the interest of the user can be specified with high accuracy. Thus, since the advertisement delivery server 20a can deliver the advertisement content desired by the user to the terminal apparatus 100, the advertisement effect can be improved.

In the second embodiment, the case has been described in which the advertisement delivery server 20a acquires the user information from the third-party server 30. However, the apparatus retaining the user information may not be the third-party server 30. For example, the terminal apparatus 100 may retain the user information. In this case, the advertisement delivery server 20a acquires the user information from the terminal apparatus 100 in accordance with the storage location information set as the "content identifier".

As described above in the first embodiment, in the "use classification" of the Opt-allow cookie, a code value is set which indicates one of a download method and a streaming method as a method of acquiring the user information from another apparatus. When information indicating the download is set in the "use classification", the requesting unit 27 of the advertisement delivery server 20a according to the second embodiment stores the user information acquired from the third-party server 30 in the user information memory unit 22. On the other hand, when information indicating the streaming is set in the "use classification", the requesting unit 27 acquires the user information from the third-party server 30 in the streaming manner and outputs the acquired user information to the determining unit 25 without storing the acquired user information in the user information memory unit 22.

As described above in the first embodiment, information including a period for which the advertisement delivery server 20a is permitted to retain the user information is set in the "accumulation condition" of the Opt-allow cookie. When the advertisement delivery server 20a according to the second embodiment acquires the user information from the third-party server 30, the advertisement delivery server 20a according to the second embodiment stores the acquired user information in the cookie memory unit 140 only for the period set in the "accumulation condition".

In the first and second embodiments described above, examples have been described in which the "exclusive place designation" of the "geogra", the "psychogra", the "sponsor classification", and the "territory classification" set in the Opt-allow cookie are set by the flag or the code value. However, the third-party server 30 may retain the information regarding the "exclusive place designation" and the "psychogra" as character string data in the user information memory unit 31. A plurality of patterns are considered to be present in the "exclusive place designation", the "psychogra", or the like, but the third-party server 30 can flexibly correspond to the plurality of patterns by retaining the "exclusive place designation", the ""psychogra", or the like as the character string data.

For example, the third-party server 30 retains character string data such as "excluding Tokyo", "excluding Minato-ku, Tokyo", or "excluding areas other than Tokyo" as the "exclusive place designation" or retains character string data such as "preference: XYZ product by ABC corporation", "preference: special product from DD Prefecture", or "intention: I would like to see only car and bicycle advertisements" as the "psychogra". Further, the advertisement delivery server 20a according to the second embodiment acquires such a kind of character string data which is not set in the Opt-allow cookie, from the third-party server 30. Then, the advertisement delivery server 20a analyzes the user information, for example, by analyzing the morpheme of the character string data acquired from the third-party server 30 and determines the advertisement content to be delivered based on the analysis result. Thus, since the advertisement delivery server 20a can acquire a plurality of user information items by retaining the "exclusive place designation", the "psychogra", or the like as the character string data in the third-party server 30, the interest of the user can be specified with high accuracy. Further, it is possible to reduce the data size of the Opt-allow cookie by retaining the "exclusive place designation", the "psychogra", or the like in which a plurality of patterns are considered to be present, in the third-party server 30.

In the first and second embodiments described above, examples have been described in which the terminal apparatus 100 transmits the Opt-allow cookie to the advertisement delivery server 20 or the like. However, the third-party server 30 may retain the Opt-allow cookie. In this case, the requesting unit 27 of the advertisement delivery server 20a requests the third-party server 30 to transmit the Opt-allow cookie, when the advertisement delivery server 20a communicates with the terminal apparatus 100 including the browser through the browser. Then, the determining unit 25 determines the advertisement content to be delivered to the terminal apparatus 100 based on the Opt-allow cookie transmitted from the third-party server 30 in response to the request from the requesting unit 27.

### Third Embodiment

In the first and second embodiments described above, as in FIGS. 5 and 6, examples have been described in which the terminal apparatus 100 displays the setting screen of the Opt-allow cookie and generates the Opt-allow cookie based on information input on the setting screen. In this case, the user who owns a plurality of terminal apparatuses requires each terminal apparatus to perform an operation of setting the Opt-allow cookie. Accordingly, in a third embodiment, a case will be described in which Opt-allow cookie are acquired by accumulating the Opt-allow cookies in a web server through a setting screen provided by the web server and causing the terminal apparatus to access the web server.

Configuration of Network System According to Third Embodiment

First, a network system according to a third embodiment will be described with reference to FIG. 11. FIG. 11 is a diagram illustrating an example of the configuration of the network system according to the third embodiment. As exemplified in FIG. 11, a network system 3 according to the third embodiment includes terminal apparatuses 200₁ to 200ₙ and an Opt-allow web server 40. The terminal apparatuses 200₁ to 200ₙ are connected to the Opt-allow web server 40 to communicate with Opt-allow web server 40 in a wired or wireless manner via a network (not illustrated). Although not illustrated in FIG. 11, the terminal apparatuses 200₁ to 200ₙ are connected to the content server 10 and the advertisement delivery server 20 exemplified in FIG. 1 to communicate with the content server 10 and the advertisement delivery server 20 in a wired or wireless manner. Hereinafter, when it is not necessary to distinguish the terminal apparatuses 200₁ to 200ₙ from each other, the terminal apparatuses 200₁ to 200ₙ are collectively referred to as the "terminal apparatuses 200" in some cases.

The Opt-allow web server 40 is a web server. When the terminal apparatuses 200 access a predetermined URL, the permission classification setting screen G21 exemplified in FIG. 5 or the restriction element setting screen G22 exemplified in FIG. 6 is provided to the terminal apparatuses 200. When the user performs various setting operations on the permission classification setting screen G21 or the restriction element setting screen G22, the Optallow web server 40 generates Opt-allow cookies in response to the various setting operations and stores the generated Opt-allow cookies in a cookie memory unit 42. Thereafter, the Opt-allow web server 40 transmits the Opt-allow cookies stored in the cookie memory unit 42 to the terminal apparatus 200, when the terminal apparatuses 200 access the Opt-allow web server 40.

Examples of the terminal apparatuses 200₁ to 200ₙ include desktop-type PCs, notebook-type PCs, cellular phones, and PDAs. When the terminal apparatuses 200 access the Opt-allow web server 40, the Opt-allow web server 40 provides the permission classification setting screen G21 or the restriction element setting screen G22 to the terminal apparatuses 200, as described above. Further, when the Opt-allow web server 40 generates the Opt-allow cookies, and then the terminal apparatuses 200 access the Opt-allow web server 40, the Opt-allow web server 40 provides the Opt-allow cookies to the terminal apparatuses 200.

Here, it is assumed that one predetermined user owns the terminal apparatuses 200₁ to 200ₙ. In this case, the user can cause the Opt-allow web server 40 to generate the Opt-allow cookies using a predetermined terminal apparatus 200, and then can access the Opt-allow web server 40 using another terminal apparatus 200, so that another terminal apparatus 200 can acquire the Opt-allow cookies. Thus, even when the user owns a plurality of terminal apparatuses 200 such as a desktop-type PC, a notebook-type PC, a cellular phone, and a PDA, the user can set the Opt-allow cookie in the plurality of terminal apparatuses 200 by performing the operation of setting the Opt-allow cookie only once.

### Configuration of Terminal Apparatus According to Third Embodiment

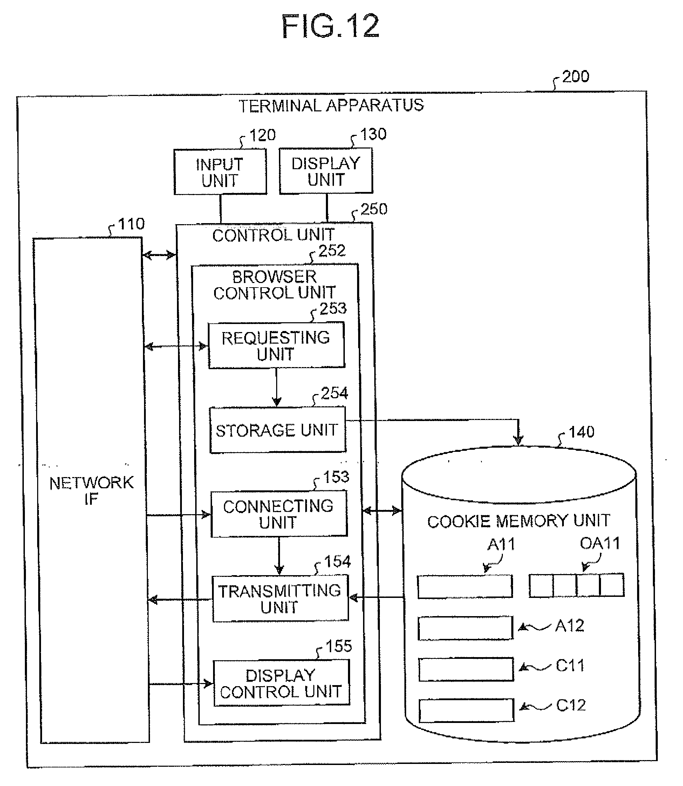

Next, the configuration of the terminal apparatus 200 illustrated in FIG. 11 will be described with reference to FIG. 12. FIG. 12 is a diagram illustrating an example of the configuration of the terminal apparatus 200 according to the third embodiment. As exemplified in FIG. 12, the terminal apparatus 200 according to the third embodiment includes a network IF 110, an input unit 120, a display unit 130, a cookie memory unit 140, and a control unit 250.

The control unit 250 includes a browser control unit 252. The browser control unit 252 performs HTTP communication with the content server 10, the advertisement delivery server 20, and the Opt-allow web server 40 through a browser. The browser control unit 252 according to the third embodiment accesses the Opt-allow web server 40 in order to acquire an HTML file that forms the permission classification setting screen G21 or the restriction element setting screen G22 from the Opt-allow web server 40. The HTML file is displayed on the browser by the display control unit 155. Further, when the user performs various setting operations on the permission classification setting screen G21 or the restriction element setting screen G22, the browser control unit 252 transmits the details of the setting operations to the Opt-allow web server 40. Thus, the browser control unit 252 can cause the Opt-allow web server 40 to generate the Opt-allow cookie.

As exemplified in FIG. 12, the browser control unit 252 includes a connecting unit 153, a transmitting unit 154, a display control unit 155, a requesting unit 253, and a storage unit 254. The requesting unit 253 requests the Opt-allow web server 40 to transmit the Opt-allow cookie by accessing the Opt-allow web server 40 storing the Opt-allow cookie through the browser. In other words, the requesting unit 253 transmits the request for acquiring the Opt-allow cookie to the Opt-allow web server 40. The storage unit 254 stores the Opt-allow cookie having transmitted from the Opt-allow web server 40 in the cookie memory unit 140 in response to the request from the requesting unit 253.

### Configuration of Opt-allow Web Server According to Third Embodiment

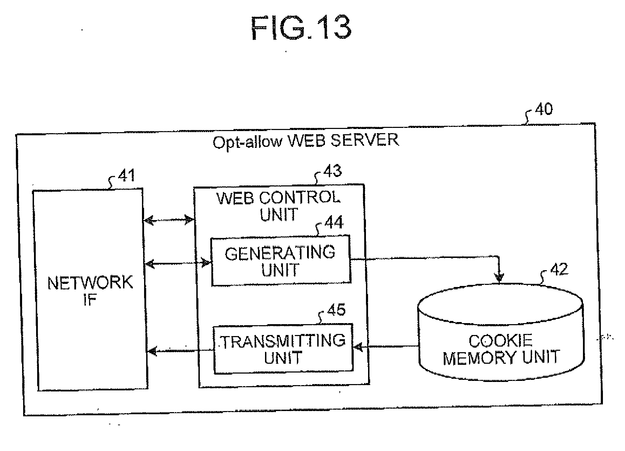

Next, the configuration of the Opt-allow web server 40 illustrated in FIG. 11 will be described with reference to FIG. 13. FIG. 13 is a diagram illustrating an example of the configuration of the Opt-allow web server 40 according to the third embodiment. As exemplified in FIG. 13, the Opt-allow web server 40 according to the third embodiment includes a network IF 41, the cookie memory unit 42, and a web control unit 43.

The network IF 41 is an NIC or the like that transmits and receives various kinds of data to and from the terminal apparatus 200. For example, the network IF 41 transmits the Opt-allow cookie to the terminal apparatus 200.

The cookie memory unit 42 is a storage device such as RAM, a semiconductor memory element such as flash memory, a hard disk, or an optical disc. The cookie memory unit 42 stores the Opt-allow cookie generated by a generating unit 44 to be described below.

For example, the web control unit 43 is realized by causing a CPU, an MPU, or the like to execute a program stored in a memory unit (not illustrated) on the RAM as a work area. For example, the web control unit 43 is realized by an integrated circuit such as an ASIC or an FPGA. The web control unit 43 operates the Opt-allow web server 40 as a web server and performs, for example, HTTP communication with the browser control unit 252 of the terminal apparatus 200.

The web control unit 43 includes a generating unit 44 and a transmitting unit 45, as exemplified in FIG. 13. When the terminal apparatus 200 accesses a predetermined URL, the generating unit 44 transmits the HTML file that forms the permission classification setting screen G21 or the restriction element setting screen G22 to the terminal apparatus 200. Then, when the generating unit 44 receives the' details of the setting operation performed on the permission classification setting screen G21 or the restriction element setting screen G22 by the user from the terminal apparatus 200, the generating unit 44 generates the Opt-allow cookie in accordance with the details of the setting operation and stores the generated Opt-allow cookie in the cookie memory unit 42.

The transmitting unit 45 transmits the Opt-allow cookie stored in the cookie memory unit 42 to the terminal apparatus 200, when the generating unit 44 generates the Opt-allow cookie, and then the terminal apparatus 200 accesses the Opt-allow web server 40.

When the generating unit 44 of the Opt-allow web server 40 generates the Opt-allow cookie, the generating unit 44 may notify the terminal apparatus 200 of an URL indicating an access destination from which the Opt-allow cookie is acquired. In this case, the requesting unit 253 of the terminal apparatus 200 accesses the URL of which the generating unit 44 notifies the terminal apparatus 200. When the terminal apparatus 200 accesses the URL, the transmitting unit 45 of the Opt-allow web server 40 transmits the Opt-allow cookie to the terminal apparatus 200.

### Advantages of Third Embodiment

As described above, the terminal apparatus 200 according to the third embodiment includes: the requesting unit 253 that requests the Opt-allow web server 40 to transmit the Opt-allow cookie by accessing the Opt-allow web server 40 storing the Opt-allow cookie through the browser; and the storage unit 254 that stores the Opt-allow cookie having transmitted from the Opt-allow web server 40 in response to the request from the requesting unit 253 in the cookie memory unit 140.

When the terminal apparatus 200 according to the third embodiment is used, even the user who owns the plurality of terminal apparatuses 200 can easily set the Opt-allow cookie in the plurality of terminal apparatuses 200 by performing the operation of setting the Opt-allow cookie only once. Further, since the web server has the function of transmitting a cookie to a client, the network system 3 according to the third embodiment can be realized without considerable remodeling of the Opt-allow web server 40.

In the third embodiment, the Opt-allow web server 40 may set identification information of the terminal apparatus 200 which is a transmission destination of the Opt-allow cookie, when the Opt-allow web server 40 sets the Opt-allow cookie on the permission classification setting screen G21 or the restriction element setting screen G22. Then, the Opt-allow web server 40 may retain the Opt-allow cookie matching the identification information in the cookie memory unit 42, and then may acquire the Opt-allow cookie matching the identification information of the terminal apparatus 200 from the cookie memory unit 42 and transmit the acquired Opt-allow cookie to the terminal apparatus 200, when the terminal apparatus 200 accesses the Opt-allow web server 40. Thus, the Opt-allow web server 40 can transmit the Opt-allow cookie only to the terminal apparatus 200 designated by the user.

In the example illustrated in FIG. 11, the case has been described in which the Opt-allow web server 40 and the terminal apparatus 200 are different apparatuses. However, the terminal apparatus 200 may have the same function as the Opt-allow web server 40. For example, the terminal apparatus 200 such as a PC may include the web control unit 43 illustrated in FIG. 13, since the terminal apparatus 200 can also operate as a web server. Thus, the user can set the Opt-allow cookie in a notebook-type PC, a cellular phone, or in a PDA by setting the Opt-allow cookie in the terminal apparatus 200 (assumed as a terminal apparatus 200A) such as a PC, and then accessing another terminal apparatus 200 such as the notebook-type PC, the cellular phone, or the PDA to the terminal apparatus 200A.

### Fourth Embodiment

The above-described network system may be realized in other various forms other than the above-described embodiments. Accordingly, in a fourth embodiment, another embodiment of the above-described network system will be described.

### Plurality of Opt-allow Cookie

In the above-described embodiments, examples have been described in which the terminal apparatus 100 or 200 retains one Opt-allow cookie in the cookie memory unit 140. However, the cookie memory unit 140 of the terminal apparatus 100 or 200 may store a plurality of Opt-allow cookies. Further, the transmitting unit 154 of the terminal apparatus 100 or 200 may change the Opt-allow cookie to be transmitted to a server apparatus among the plurality of Opt-allow cookies stored in the cookie memory unit 140 depending on a situation when the terminal apparatus 100 or 200 is communicating with the server apparatus connected through the communication connection by the connecting unit 153.

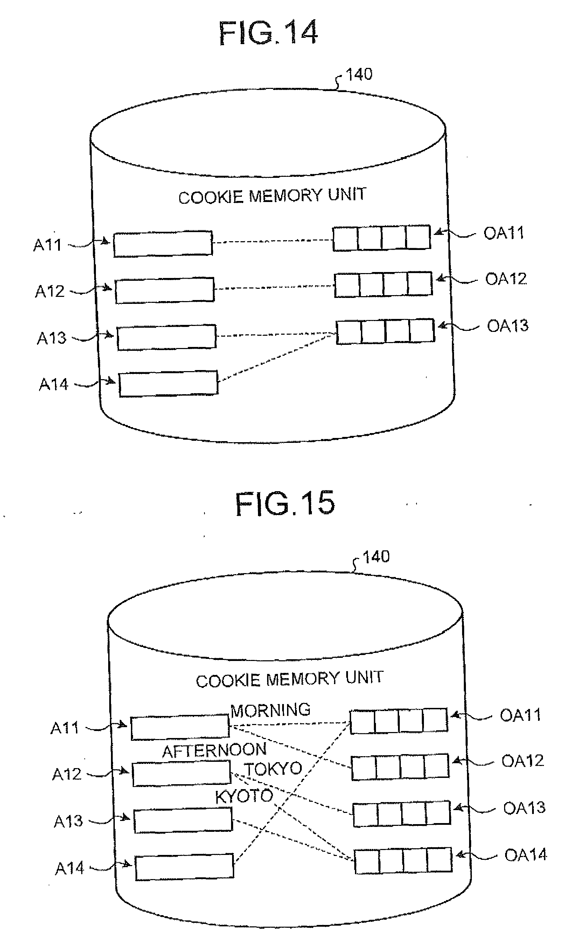

Several examples will be described with reference to FIGS. 14 and 15. FIGS. 14 and 15 are diagrams illustrating Opt-allow cookies retained by the terminal apparatus described in each embodiment according to modified examples. Hereinafter, the terminal apparatus 100 will be described as an example, but the same is applied to the terminal apparatus 200.

In the example illustrated in FIG. 14, the cookie memory unit 140 of the terminal apparatus 100 stores the Opt-allow cookie corresponding to each advertisement delivery server. Specifically, the cookie memory unit 140 stores an Opt-allow cookie OA11 corresponding to an advertisement delivery server having transmitted an Ad cookie A11, an Opt-allow cookie OA12 corresponding to an advertisement delivery server having transmitted an Ad cookie A12, and an Opt-allow cookie OA13 corresponding to an advertisement delivery server having transmitted an Ad cookie A13 and an advertisement delivery server having transmitted an Ad cookie A14. Thus, the cookie memory unit 140 may store one different Opt-allow cookie for each advertisement delivery server or may store one Opt-allow cookie for a plurality of advertisement delivery servers.

In the example illustrated in FIG. 14, the transmitting unit 154 transmits, to the advertisement delivery server 20, the Opt-allow cookie corresponding to the advertisement delivery server 20 connected through the communication connection by the connecting unit 153 among the Opt-allow cookies stored in the cookie memory unit 140. For example, the transmitting unit 154 transmits the Optallow cookie OA11 for the advertisement delivery server having transmitted the Ad cookie A11 and transmits the Optallow cookie OA12 for the advertisement delivery server having transmitted the Ad cookie A12.

Thus, since the user of the terminal apparatus 100 can transmit different opt-allow cookies to the advertisement delivery servers, respectively, the user can acquire desired advertisement content from the advertisement delivery servers.

In the example illustrated in FIG. 15, the cookie memory unit 140 of the terminal apparatus 100 stores an opt-allow cookie corresponding to a predetermined time range or a predetermined time and date range or an Optallow cookie corresponding to a predetermined place. specifically, the cookie memory unit 140 stores the Optallow cookie OA11 corresponding to "morning" and the Optallow cookie OA12 corresponding to "afternoon" as the Optallow cookie corresponding to the advertisement delivery server having transmitted the Ad cookie A11. Further, the cookie memory unit 140 stores the Opt-allow cookie OA13 corresponding to "Tokyo" and the Opt-allow cookie OA14 corresponding to "Kyoto" as the Opt-allow cookie corresponding to the advertisement delivery server having transmitted the Ad cookie A12.

In the example illustrated in FIG. 15, the transmitting unit 154 transmits the Opt-allow cookie corresponding to the current time among the Opt-allow cookies stored in the cookie memory unit 140 to the advertisement delivery server 20 or transmits the Opt-allow cookie corresponding to a place at which the terminal apparatus 100 is located among the Opt-allow cookies to the advertisement delivery server 20. For example, when the current time is "morning", the transmitting unit 154 transmits the Opt-allow cookie OA11 to the advertisement delivery server having transmitted the Ad cookie A11. When the current time is "afternoon", the transmitting unit 154 transmits the Opt-allow cookie OA12 to the advertisement delivery server having transmitted the Ad cookie A11. For example, when the place at which the terminal apparatus 100 is located is "Tokyo", the transmitting unit 154 transmits the Opt-allow cookie OA13 to the advertisement delivery server having transmitted the Ad cookie A12. When the place at which the terminal apparatus 100 is located is "Kyoto", the transmitting unit 154 transmits the Opt-allow cookie OA14 to the advertisement delivery server having transmitted the Ad cookie A12.

Thus, since the user of the terminal apparatus 100 can transmit the different Opt-allow cookies to the advertisement delivery servers in accordance with the time period or the place, the user can acquire desired advertisement content from the advertisement delivery servers. For example, in some cases, a user would like to view advertisements for cars in the morning, but would like to view advertisements for meals in the afternoon. For example, in some cases, another user would like to view advertisements for cars near the house or the like of the user, but would like to view advertisements for meals in a business trip destination or the like. Since the terminal apparatus 100 performs the above-described processes described with reference to FIG. 15, the terminal apparatus 100 can respond to the user's needs.

Although not illustrated here, the cookie memory unit 140 may store a plurality of Opt-allow cookies corresponding to one advertisement delivery server 20. For example, when the terminal apparatus 100 is shared by a plurality of users, the terminal apparatus 100 receives different Ad cookies for the users from the advertisement delivery server 20 in some cases. This is because the advertisement delivery server 20 generates different cookies when the user IDs are different from each other. Accordingly, the cookie memory unit 140 of the terminal apparatus 100 may store different Opt-allow cookies for the users, as in the Ad cookies. When the terminal apparatus 100 transmits the Ad cookie, the terminal apparatus 100 also transmits the Opt-allow cookie corresponding to the Ad cookie to the advertisement delivery server 20.

### Transmission Chance of Opt-allow Cookie

In the above-described embodiments, examples have been described in which the terminal apparatus 100 or 200 transmits the Opt-allow cookie together with the Ad cookie, when the terminal apparatus 100 or 200 transmits the Ad cookie. However, when the terminal apparatus 100 or 200 receives a request for acquiring the Opt-allow cookie from the advertisement delivery server 20, the terminal apparatus 100 or 200 may transmit the Ad cookie and the Opt-allow cookie in response to the request for acquiring the Opt-allow cookie or may transmit only the Opt-allow cookie. For example, when the advertisement delivery server 20a according to the second embodiment receives only the Opt-allow cookie from the terminal apparatus 100, the advertisement delivery server 20a acquires the user information from the third-party server 30 or the like, referring to the storage location information set with the "content identifier" of the Opt-allow-cookie.

Further, the terminal apparatus 100 or 200 may transmit the Opt-allow cookie instead of the Ad cookie, when the terminal apparatus 100 or 200 transmits the Ad cookie. At this time, the transmitting unit 154 of the terminal apparatus 100 or 200 sets a cookie name set in the Ad cookie received from the advertisement delivery server 20 in the "issuer identifier" of the Opt-allow cookie. Thus, the advertisement delivery server 20 can distinguish the browser of the terminal apparatus 100 or 200, referring to the "issuer identifier" of the Opt-allow cookie received from the transmitting unit 154.

### Setting Details of Opt-allow Cookie

In the above-described embodiments, examples have been described in which the flag or the like indicating whether the use of the user information is permitted is mainly set in the Opt-allow cookie. However, the user information itself may be set as character string data in the Opt-allow cookie. For example, information of "SEX: MALE, AGE: 25,···" may be URL-encoded and may be set in VALUE of the Opt-allow cookie. In this case, the advertisement delivery server 20 or the like analyzes the morphemes of the character string data set in the Opt-allow cookie to analyze the user information and determines the advertisement content to be delivered based on the analysis result.

### Sharing Condition

Although not described in the above-described embodiments, the server apparatus such as the advertisement delivery server 20 may share the user information with the server apparatuses. For example, as the advertisement delivery servers, an advertisement delivery server only for a PC is present and an advertisement delivery server only for a portable terminal is also present. When the advertisement delivery server only for PCs and the advertisement delivery server only for the portable terminals cooperate with each other, both the advertisement delivery servers can deliver advertisement content based on user information obtained from various devices. Here, as described above, a flag is set which indicates whether or not the "sharing condition" of the Opt-allow cookie is shared between the advertisement delivery servers. Accordingly, when the user sets the "sharing condition", the server apparatuses can be notified of whether or not the user information is shared between the server apparatuses.

### Server Apparatus

In the above-described embodiments, examples have been described in which the terminal apparatus 100 or 200 transmits the Opt-allow cookie to the advertisement delivery server 20 or 20a. However, the terminal apparatus 100 or 200 may transmit the Opt-allow cookie to the server apparatus such as the content server 10. For example, the content server 10 customizes web pages to be delivered to the terminal apparatus 100 or 200 based on the user information. In this case, the terminal apparatus 100 or 200 can acquire a web page desired by the user from the content server 10 by transmitting both the content cookie and the Opt-allow cookie to the content server 10.

### System Configuration

Among the processes described in the above-described embodiments, some or all of the processes automatically performed may be manually performed, or some or all of the processes manually performed may be automatically performed in accordance with known methods. Further, the information including the processing orders, the specific names, the various kinds of data, or parameters illustrated in the document or the drawings may be arbitrarily modified except for the special cases. For example, the various kinds of information exemplified in FIGS. 2 to 6, 12, 14, 15, and the like are merely examples, and thus can be modified to any information.

The constituent elements of each apparatus illustrated in the drawings are functionally conceptual elements, and thus may not necessarily be configured physically. That is, the specific dispersed and integrated forms of each apparatus are not limited to the illustrated forms, but some or all of the forms of each apparatus may be configured to be dispersed or integrated functionally or physically in any unit depending on various loads or use statuses. For example, the generating unit 151 of the terminal apparatus 100 illustrated in FIG. 3 may be included in another apparatus other than the terminal apparatus 100. For example, an Opt-allow cookie generating apparatus different from the terminal apparatus 100 may include the generating unit 151 and an Opt-allow cookie generated by the Opt-allow cookie generating apparatus may be set in the terminal apparatus 100.

In the above-described embodiments, appropriate combinations can be made, as long as the processing details are not contradictory. For example, the terminal apparatus 200 illustrated in FIG. 12 may include the generating unit 151 illustrated in FIG. 3. That is, the terminal apparatus 200 according to the third embodiment may perform the process of generating the Opt-allow cookie and may also perform the process of acquiring the Opt-allow cookie from the Opt-allow web server 40.

### Program

It is possible to create a program in which the processes performed by the terminal apparatuses 100 and 200 described in the embodiments are described with a language executable by a computer. For example, it is possible to create a program in which the processes performed by the terminal apparatus 100 according to the first embodiment are described with a language executable by a computer. In this case, by causing a computer to execute the program, it is possible to obtain the same advantages as those of the above-described first embodiment. Further, the same processes as those described in the first embodiment may be executed by recording the program in a computer-readable recording medium and causing the computer to read and execute the program recorded on the recording medium.

Likewise, it is possible to create a program in which the processes performed by the advertisement delivery server 20, the third-party server 30, the Opt-allow web server 40, or the like described in the embodiments are described with a language executable by a computer. For example, it is possible to create a program in which the processes performed by the advertisement delivery server 20 according to the first embodiment are described with a language executable by a computer. In this case, by causing the computer to execute the program, it is possible to obtain the same advantages as those of the above-described first embodiment. Further, the same processes as those described in the first embodiment may be executed by recording the program in a computer-readable recording medium and causing the computer to read and execute the program recorded on the recording medium.

It is possible to obtain the advantage that the terminal apparatus, the server apparatus, the network system, the communication method, and the communication program according to the embodiment can deliver content desired by the users.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A terminal apparatus (100,200) comprising:
a memory unit (140) that stores permission data which is data set by a user and is data indicating whether use of user information regarding the user is permitted for each user information;
a connecting unit (153) that performs communication connection with a server apparatus (20) that determines content to be delivered based on the user information; and
a transmitting unit (154) that transmits the permission data stored in the memory unit (140) to the server apparatus (20), when the server apparatus (20) connected through the communication connection by the connecting unit (153) receives a cookie (HTTP cookie).

2. The terminal apparatus (100,200) according to claim 1, wherein the memory unit (140) stores the permission data including storage location information indicating a storage location at which the user information is stored.

3. The terminal apparatus (100,200) according to claim 1 or 2, wherein
the memory unit (140) stores a plurality of the permission data, and
the transmitting unit (154) changes the permission data to be transmitted to the server apparatus (20) among the plurality of permission data stored in the memory unit (140) in accordance with a status when the communication is performed with the server apparatus (20).

4. The terminal apparatus (100,200) according to claim 3, wherein
the memory unit (140) stores the permission data corresponding to each server apparatus (20), and
the transmitting unit (154) transmits, to the server apparatus (20), the permission data corresponding to the server apparatus (20) connected through the communication connection by the connecting unit (153) among the permission data stored in the memory unit (140).

5. The terminal apparatus (100,200) according to claim 3, wherein
the memory unit (140) stores the permission data corresponding to a predetermined time range or a predetermined time and date range, and
the transmitting unit (154) transmits, to the server apparatus (20), the permission data corresponding to current time and date among the permission data stored in the memory unit (140).

6. The terminal apparatus (100,200) according to claim 3, wherein
the memory unit (140) stores the permission data corresponding to a predetermined place, and
the transmitting unit (154) transmits, to the server apparatus (20), the permission data corresponding to a position at which the terminal apparatus (100,200) is located among the permission data stored in the memory unit (140).

7. The terminal apparatus (100,200) according to any one of claims 1 to 6, further comprising:
a requesting unit (253) that requests a web server (40) storing the permission data to transmit the permission data by accessing the web server (40) through a browser; and
a storage unit (254) that stores, in the memory unit (140), the permission data transmitted from the web server (40) in response to the request from the requesting unit (253).

8. The terminal apparatus (100,200) according to any one of claims 1 to 7, wherein the transmitting unit (154) transmits, to the server apparatus (20), the cookie received from the server apparatus (20) connected through the communication connection by the connecting unit (153) and the permission data stored in the memory unit (140).

9. The terminal apparatus (100,200) according to any one of claims 1 to 8, wherein the memory unit (140) stores, as the permission data, an attribute of the user, a preference of the user, an intention of the user, a current position of the terminal apparatus (100,200), or data indicating whether use of the user information regarding a communication history of the communication performed by the terminal apparatus (100,200) is permitted for each user information.

10. The terminal apparatus (100,200) according to any one of claims 1 to 9, wherein the memory unit (140) stores the permission data including restriction data which is data for restricting the use of the user information for each user information.

11. The terminal apparatus (100,200) according to claim 10, wherein the memory unit (140) stores, as the restriction data, use form data for restricting a use purpose of the user information, number restriction data for restricting the number of terminal apparatuses (100,200) or users specified by the use of the user information, device data for restricting a device suitable as a delivery destination of content determined based on the user information, or lifetime data for restricting the number of times the user information is used or a use period of the user information.

12. A server apparatus (20) comprising:
a requesting unit (27) that requests a predetermined apparatus to transmit permission data which is data set by a user and is data indicating whether use of user information regarding the user is permitted for each user information, when communication is performed with a terminal apparatus (100,200) including a browser through the browser; and
a determining unit (25) that determines content to be delivered to the terminal apparatus (100,200) based on the permission data transmitted from the predetermined apparatus in response to the request from the requesting unit (27).

13. A network system comprising:
a terminal apparatus (100,200); and
a server apparatus (20),
wherein the terminal apparatus (100,200) includes
a memory unit (140) that stores permission data which is data set by a user and is data indicating whether use of user information regarding the user is permitted for each user information,
a connecting unit (153) that performs communication connection with a server apparatus (20) that determines content to be delivered based on the user information, and
a transmitting unit (154) that transmits the permission data stored in the memory unit (140) to the server apparatus (20), when the server apparatus (20) connected through the communication connection by the connecting unit (153) receives a cookie, and
wherein the server apparatus (20) includes
a receiving unit (24) that receives the cookie from the terminal apparatus (100,200), and
a determining unit (25) that determines the content to be delivered to the terminal apparatus (100,200) based on the permission data, when the receiving unit (24) receives the permission data as the cookie.

14. A method of communicating executed by a terminal apparatus (100,200), comprising:
performing communication connection with a server apparatus (20) that determines content to be delivered to the terminal apparatus (100,200) based on user information regarding a user of the terminal apparatus (100,200);
transmitting, to the server apparatus (20), permission data which is data set by the user and is data indicating whether use of the user information is permitted for each user information, when a cookie is received by the server apparatus (20) connected through the communication connection in the performing of the communication connection.

15. A communication program causing a computer to execute:
a connection order in which communication connection is performed with a server apparatus (20) that determines content to be delivered to the terminal apparatus (100,200) based on user information regarding a user of the terminal apparatus (100,200);
a transmission order in which permission data which is data set by the user and is data indicating whether use of the user information is permitted for each user information is transmitted to the server apparatus (20), when a cookie is received by the server apparatus (20) connected through the communication connection in the connection order.
